# EUROPÄISCHE PATENTSCHRIFT

(11) **EP 4 122 736 B1**
(45) Veröffentlichungstag und Bekanntmachung des Hinweises auf die Patenterteilung: **13.11.2024**
(21) Anmeldenummer: 22184443.4
(22) Anmeldetag: 12.07.2022
(51) Int. Cl.: B60K 7/00, B60K 17/04

(54) **FAHRZEUGACHSE UND FAHRZEUG**
VEHICLE AXLE AND VEHICLE
ESSIEU DE VÉHICULE ET VÉHICULE

(30) Priorität: 20.07.2021 DE 102021118702
(43) Veröffentlichungstag der Anmeldung: 25.01.2023
(73) Patentinhaber: BPW Bergische Achsen Kommanditgesellschaft, 51674 Wiehl (DE)
(72) Erfinder: Karai, Krisztián, 9700 Szombathely (HU); Gernyi, Martin, 9933 Orimagyarósd (HU); Gemassmer, Christoph, 53227 Bonn (DE); Schlimbach, Andreas, 53804 Much (DE); Hagestedt, Birte, 51427 Bergisch Gladbach (DE)
(74) Vertreter: DREISS Patentanwälte PartG mbB

(56) Entgegenhaltungen:
- DE-A1- 102019 109 159
- DE-A1- 102019 200 932
- DE-U1- 202016 006 076
- US-A1- 2019 366 834

## Beschreibung

Die Erfindung betrifft eine Fahrzeugachse, mit einem Tragrahmen, der eine Aufnahmeöffnung begrenzt, mit einer elektrischen Vorrichtung, die eine elektrische Maschine aufweist, wobei die elektrische Maschine im Motor- und/oder im Generatorbetrieb betreibbar ist und die elektrische Vorrichtung zumindest teilweise in der Aufnahmeöffnung des Tragrahmens aufgenommen und an dem Tragrahmen befestigt ist, mit endseitigen Achstummeln, an denen jeweils ein drehbar gelagerter Radkopf angeordnet ist, wobei mindestens einer der Radköpfe mittels der elektrischen Maschine beschleunigt und/oder verzögert werden kann, wobei der jeweilige Achsstummel an jeweils einem Verbindungsabschnitt des Tragrahmens angeordnet ist und der Verbindungsabschnitt eine dem Radkopf zugewandte Außenseite und eine der Aufnahmeöffnung zugewandte Innenseite aufweist.

Weiter betrifft die Erfindung ein Fahrzeug mit einer solchen Fahrzeugachse.

Solche Fahrzeugsachsen dienen unter anderem dazu, die Effizienz von Nutzfahrzeugen zu steigern und den Ausstoß von CO2 zu verringern. So können derartige Fahrzeugachsen beispielsweise zur Hybridisierung bestehender verbrennungsmotorischer Antriebsstränge oder zur Rekuperation von Bremsenergie verwendet werden. Weiter können derartige Fahrzeugsachsen zur Versorgung von Zusatzaggregaten bzw. Nebenaggregaten eines Fahrzeugs eingesetzt werden, um beispielsweise Batterien von Heiz- oder Kühlvorrichtungen, Druckluftgeräten oder dergleichen zu laden.

Im Zuge der Kombination derartiger Fahrzeugachsen mit elektrischen Vorrichtungen besteht eine besondere Herausforderung darin, die elektrische Maschine kompakt und mit möglichst geringem Gewicht in die Fahrzeugachse zu integrieren, eine ausreichende Kühlung zu ermöglichen und zudem eine Zugänglichkeit für eine Wartung zu ermöglichen.

Eine Fahrzeugachse der eingangsgenannten Art ist beispielsweise aus dem Dokument DE 11 2018 003 839 T5 bekannt. Gemäß DE 11 2018 003 839 T5 wird eine elektrische Maschine der Fahrzeugachse an vier Motorhaltern befestigt, die ihrerseits an zwei Streben eines Traggestells der Fahrzeugachse angeordnet sind. Hierbei ist nachteilig, dass die elektrische Maschine den Verformungen der Streben folgt und dadurch dynamische Lasten wie z. B. Stöße oder Vibrationen in Komponenten überträgt, die mit der elektrischen Maschine verbunden sind. So kann es z. B. zu Schäden an Komponenten wie Lagern, Wellen oder Zahnrädern kommen. Aus der DE 10 2019 200932 A1 sind Antriebsachsen für ein Flurförderfahrzeug bekannt, bei denen Antriebseinrichtungen vorgesehen sind, die über Rahmenanschlüsse an einem Fahrzeugrahmen befestigt sind.

Vor diesem Hintergrund liegt der Erfindung die technische Problemstellung zugrunde, eine verbesserte Fahrzeugachse anzugeben, die insbesondere eine robuste und zuverlässige Integration einer elektrischen Maschine aufweist. Ferner soll ein Fahrzeug mit einer solchen Fahrzeugachse angegeben werden.

Die technische Problemstellung wird jeweils durch die unabhängigen Ansprüche gelöst. Weitere Ausgestaltungen der Erfindung ergeben sich aus den abhängigen Ansprüchen und der nachstehenden Beschreibung.

Gemäß einem ersten Aspekt betrifft die Erfindung eine Fahrzeugachse, mit einem Tragrahmen, der eine Aufnahmeöffnung begrenzt, mit einer elektrischen Vorrichtung, die eine elektrische Maschine aufweist, wobei die elektrische Maschine im Motor- und/oder im Generatorbetrieb betreibbar ist und die elektrische Vorrichtung zumindest teilweise in der Aufnahmeöffnung des Tragrahmens aufgenommen und an dem Tragrahmen befestigt ist, mit endseitigen Achsstummeln, an denen jeweils ein drehbar gelagerter Radkopf angeordnet ist, wobei mindestens einer der Radköpfe mittels der elektrischen Maschine beschleunigt und/oder verzögert werden kann, wobei der jeweilige Achsstummel an jeweils einem Verbindungsabschnitt des Tragrahmens angeordnet ist und der Verbindungsabschnitt eine dem Radkopf zugewandte Außenseite und eine der Aufnahmeöffnung zugewandte Innenseite aufweist. Die Fahrzeugachse zeichnet sich dadurch aus, dass die elektrische Vorrichtung unmittelbar an einer der Aufnahmeöffnung zugewandten Anschlagfläche der Innenseite des Verbindungsabschnitts angeordnet ist.

Demnach ist die elektrische Vorrichtung, die die elektrische Maschine aufweist, unmittelbar an dem Bereich des Tragrahmens befestigt, der auch den zugeordneten Achsstummel trägt. So lässt sich eine besonders steife und positionstreue Einbindung der elektrischen Maschine in die Fahrzeugachse erreichen. Zudem spart diese Anordnung axiale Baulänge ein, so dass eine Integration von zwei elektrischen Maschinen in den Tragrahmen ermöglicht werden kann.

Wenn vorliegend von einer elektrischen Vorrichtung gesprochen wird, so kann diese elektrische Vorrichtung neben der eigentlichen elektrischen Maschine zusätzliche mechanische und/oder elektrische oder elektronische Komponenten enthalten, wie Anschlussklemmen, Sicherungsschalter, Steuergeräte oder dergleichen. Weiter kann die elektrische Vorrichtung eines oder mehrere Dämpfungselemente oder Dichtelemente enthalten, die zwischen dem Verbindungsabschnitt, an dem die elektrische Vorrichtung befestigt ist, und z. B. der elektrischen Maschine oder einem Getriebe der elektrischen Vorrichtung angeordnet sind.

Die elektrische Vorrichtung kann lösbar gegen die der Aufnahmeöffnung zugewandte Anschlagfläche verspannt sein. Beispielsweise kann die elektrische Vorrichtung mit dem Verbindungsabschnitt verschraubt sein. Alternativ oder ergänzend kann die elektrische Vorrichtung formschlüssig oder kraftschlüssig mit dem Verbindungsabschnitt verbunden sein. Gemäß alternativer Ausgestaltungen kann die elektrische Vorrichtung unlösbar mit dem Verbindungsabschnitt verbunden sein, insbesondere stoffschlüssig mit dem Verbindungsabschnitt verbunden sein.

Vorzugsweise ist die Anschlagfläche ringförmig, und sie umgibt konzentrisch einen gegenüber der Anschlagfläche axial vor- oder zurückspringenden Zentrierring. Der Zentrierring ist dazu ausgebildet, die elektrische Vorrichtung radial auszurichten, also zu zentrieren. Vorzugsweise ist bei dieser Ausgestaltung die elektrische Vorrichtung in axialer Richtung ohne einen Kontakt zu dem Zentrierring.

Die elektrische Vorrichtung kann zumindest abschnittsweise spaltfrei an der Anschlagfläche anliegen. So kann eine insbesondere flüssigkeits- und/oder staubdichte Verbindung zwischen dem Verbindungsabschnitt und der elektrischen Vorrichtung erreicht werden, um ein Eindringen von Schutz und Feuchtigkeit aus der Umgebung zu vermeiden.

Es kann vorgesehen sein, dass der Achsstummel und der jeweilige Verbindungsabschnitt des Tragrahmens jeweils eine Durchgangsöffnung zum Aufnehmen einer Welle der elektrischen Vorrichtung aufweisen, wobei die Welle der elektrischen Vorrichtung die Durchgangsöffnungen des der elektrischen Vorrichtung zugeordneten Verbindungsabschnitts und Achsstummels entlang ihrer axialen Längserstreckung durchdringt, und wobei sich die Anschlagfläche im Wesentlichen senkrecht bzw. quer zu der axialen Längserstreckung der Welle erstreckt.

Die elektrische Vorrichtung ist daher in axialer Richtung betrachtet so nahe wie möglich an dem zugeordneten Achsstummel angeordnet, um eine kompakte axiale Integration der elektrischen Vorrichtung in den axial zur Verfügung stehenden Bauraum zu ermöglichen.

Die Welle dient zur Übertragung einer Antriebs- und/oder Bremsleistung zwischen dem Radkopf und der mit dem Radkopf gekoppelten elektrischen Maschine.

Der jeweilige Achsstummel kann rohrförmig ausgestaltet sein und eine im Wesentlichen kreiszylindrische Grundform aufweisen.

Der Verbindungsabschnitt kann einen kreisrund umlaufenden Kragen aufweisen, der die Durchgangsöffnung des Verbindungsabschnitts begrenzt, wobei der jeweilige Achsstummel mit einem z. B. kreiszylindrischen Endabschnitt in der z. B. kreiszylindrischen Durchgangsöffnung des Verbindungsabschnitts sitzt und insbesondere stoffschlüssig mit dem Verbindungsabschnitt verbunden ist. So kann eine zuverlässige Verbindung zwischen dem jeweiligen Verbindungsabschnitt und dem zugeordneten Achsstummel erreicht werden, insbesondere durch Schweißen.

Es kann vorgesehen sein, dass der Verbindungsabschnitt innerhalb der Fläche der Anschlagfläche einen Lochkreis einer Schraubenverbindung aufweist, mit der die elektrische Vorrichtung gegen die Anschlagfläche verspannt ist. Der Durchmesser des Lochkreises ist größer, als der Durchmesser der Durchgangsöffnung des Verbindungsabschnitts.

Der Tragrahmen kann zumindest zwei zueinander beabstandete Streben aufweisen, wobei ein erstes Ende jeder Strebe mit einem ersten Verbindungsabschnitt der Verbindungsabschnitte, und ein zweites Ende jeder Strebe mit einem zweiten Verbindungsabschnitt der Verbindungsabschnitte verbunden ist, und wobei die Streben und die Verbindungsabschnitte die Aufnahmeöffnung begrenzen und die elektrische Vorrichtung zumindest abschnittsweise einfassen. Dadurch ist der Tragrahmen eine offene Rahmen- bzw. Strebenstruktur, die eine Integration der elektrischen Vorrichtung in die Fahrzeugachse mit einem möglichst geringen Gesamtgewicht ermöglicht.

Es kann vorgesehen sein, dass die elektrische Vorrichtung ausschließlich an einem der Verbindungsabschnitte befestigt ist und insbesondere nicht an einer der Streben befestigt ist. Auf diese Weise kann definierte, steife Anbindung der elektrischen Vorrichtung an die Tragstruktur erreicht werden. Zudem kann vermieden werden, dass über weitere Befestigungspunkte dynamische Lasten, wie Stöße, Vibrationen oder dergleichen in die elektrische Vorrichtung eingeleitet werden.

Die Streben können zumindest abschnittsweise einen ersten Abstand zueinander aufweisen, die Verbindungsabschnitte können zumindest abschnittsweise einen zweiten Abstand zueinander aufweisen und der erste Abstand kann kleiner sein als der zweite Abstand. So kann eine flache Bauart der Fahrzeugachse erreicht werden.

Die Streben können Halbschalen aufweisen. Die Halbschalen können Blechformteile sein, die die elektrische Vorrichtung zumindest abschnittsweise flächig gegenüber einer Umgebung abschirmen und insbesondere vor Steinschlägen oder beim Aufsetzen des Fahrzeugs im Fahrbetrieb schützen.

Die Halbschalen können wenigstens zwei Seitenwangen aufweisen, wobei die Seitenwangen jeweils einen Winkel größer 90 ° zu einem Mittelteil der Halbschalen einschließen, insbesondere einen Winkel ausgewählt aus einem Bereich größer-gleich 90 ° und kleiner-gleich 115 ° zu dem Mittelteil der Halbschalen einschließen. Die Halbschalen können symmetrisch sein, insbesondere spiegelsymmetrisch zu mindestens einer Planebene im Raum sein.

Die Streben können eine oder mehr Durchgangsöffnungen aufweisen, um eine Wärmeabfuhr und/oder ein Entweichen von Feuchtigkeit aus der Aufnahmeöffnung zu ermöglichen.

Die Streben können zumindest abschnittsweise doppelwandig ausgeführt sein. Beispielsweise kann jede Strebe ein Einlegeblech aufweisen, das innerhalb der Halbschale einer jeweiligen Strebe angeordnet ist. Das Einlegeblech kann eine geringere axiale Längserstreckung aufweisen als die Halbschale. Das Einlegeblech kann zu Durchgangsöffnungen der Halbschalen korrespondierende Durchgangsöffnungen aufweisen. Die Durchgangsöffnungen können ebenfalls zu Montage- und/oder Wartungszwecken dienen. Das Einlegeblech kann mit der Halbschale stoffschlüssig verbunden sein oder lösbar verbunden sein.

Die Streben können zumindest abschnittsweise stoffschlüssig mit den Verbindungsabschnitten verbunden sein.

Eine Innenkontur der Streben kann zumindest abschnittsweise einer Außenkontur der Verbindungsabschnitte entsprechen. Beispielsweise kann die Außenkontur eines jeweiligen Verbindungsabschnitts eine zu den Halbschalen mit Seitenwangen korrespondierende Form aufweisen.

Die elektrische Vorrichtung kann ein der elektrischen Maschine vorgeschaltetes Getriebe aufweisen. Das Getriebe dient dazu, Drehzahlen und Drehmomente zwischen der elektrischen Maschine und einem zugeordneten Radkopf zu über- und/oder zu untersetzen. Das Getriebe kann beispielsweise ein Zahnradgetriebe, wie ein Stirnradgetriebe, ein Planetengetriebe oder dergleichen sein.

Eine zwischen der elektrischen Maschine und dem Getriebe angeordnete Verbindungswelle kann parallel und mit einem Achsabstand zu einer Radkopfdrehachse des jeweiligen Radkopfs angeordnet sein.

Vorzugsweise ist, auf der anderen Fahrzeugseite, eine weitere elektrische Vorrichtung vorgesehen, wobei die weitere elektrische Vorrichtung an einer der Aufnahmeöffnung zugewandten Anschlagfläche der Innenseite eines weiteren Verbindungsabschnitts der Verbindungsabschnitte angeordnet ist.

Jedem Radkopf der Fahrzeugachse kann jeweils eine der beiden elektrischen Vorrichtungen zugeordnet sein und jeder Radkopf kann mittels der jeweils zugeordneten elektrischen Vorrichtung beschleunigt und/oder verzögert werden. Insbesondere kann jeder der elektrischen Maschinen ein Getriebe vorgeschaltet sein.

Die Fahrzeugachse ist im Wesentlichen symmetrisch in Bezug auf die Achsmitte aufgebaut.

Gemäß einem zweiten Aspekt betrifft die Erfindung ein Fahrzeug, mit mindestens einer erfindungsgemäßen Fahrzeugachse, wobei die elektrische Maschine mit einer Batterie des Fahrzeugs gekoppelt ist. Das Fahrzeug kann eine Kühlvorrichtung zum Kühlen eines Transportvolumens aufweisen, wobei die Batterie zur Energieversorgung der Kühlvorrichtung mit der Kühlvorrichtung verbunden ist.

Das Fahrzeug kann eine Steuerungseinheit zur Überwachung eines Ladezustands der Batterie aufweisen, wobei die Steuerungseinheit dazu eingerichtet ist, einen Generatorbetrieb der elektrischen Maschine zu aktivieren, sobald eine Ladeschwelle der Batterie unterschritten wird.

Alternativ oder ergänzend kann der Generatorbetrieb der elektrischen Maschine zur Rekuperation beim Bremsvorgang oder im Segelbetrieb des Fahrzeugs genutzt werden.

Bei der Fahrzeugachse verbindet die durch den Achsstummel hindurchführende Drehverbindung den jeweiligen Radkopf der Fahrzeugachse mit dem Kraftaus- bzw. Eingang der elektrischen Vorrichtung. Hierbei kann die Drehverbindung ein drehmomentbegrenzendes Glied aufweisen, z. B. in der Bauart als Rutschkupplung. Die Drehverbindung kann außerdem ein drehrichtungsabhängig den Kraftfluss entweder sperrendes oder freigebendes Glied aufweisen, das z. B. als ein Freilauf ausgebildet sein kann.

Vorzugsweise sind das drehmomentbegrenzende Glied und das drehrichtungsabhängig den Kraftfluss entweder sperrende oder freigebende Glied im Kraftfluss der Drehverbindung hintereinander geschaltet.

Das mit der Fahrzeugachse bestückte Fahrzeug selbst kann z. B. ein Nutzfahrzeuganhänger oder ein Sattelauflieger sein mit einem zulässigen Gesamtgewicht von mehr als 7,5 t. Nachfolgend wird die Erfindung anhand einer Ausführungsbeispiele darstellenden Zeichnung näher beschrieben. Es zeigen:
Fig. 1 : die Fahrzeugachse ohne Radköpfe in einer perspektivischen Ansicht;
Fig. 2 : die Fahrzeugachse in einer Seitenansicht von vorne oder hinten;

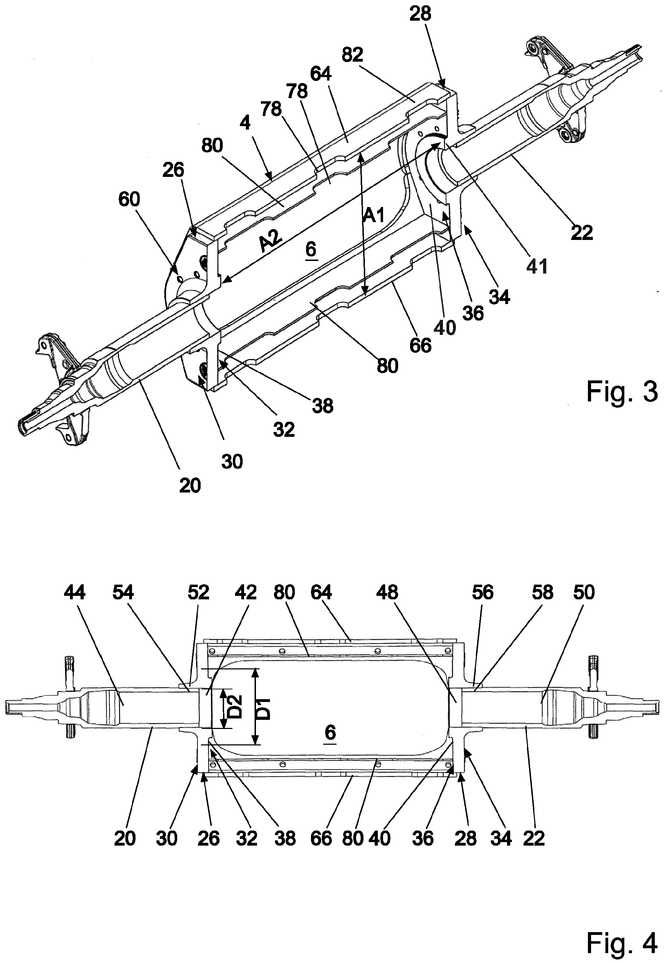

Fig. 3 : die Fahrzeugachse in einem Längsschnitt und in einer perspektivischen Ansicht, ohne die elektrischen Antriebseinheiten;
Fig. 4 : die Fahrzeugachse in einem Längsschnitt und in einer Seitenansicht ohne elektrische Antriebseinheiten;
Fig. 5 : einen Ausschnitt der Fahrzeugachse aus Fig. 1 in einem Längsschnitt in einer perspektivischen Ansicht ohne elektrische Antriebseinheiten und mit einem Radkopf;
Fig. 6 : einen Ausschnitt der Fahrzeugachse aus Fig. 1 in einem Längsschnitt in einer Seitenansicht mit einem Radkopf.

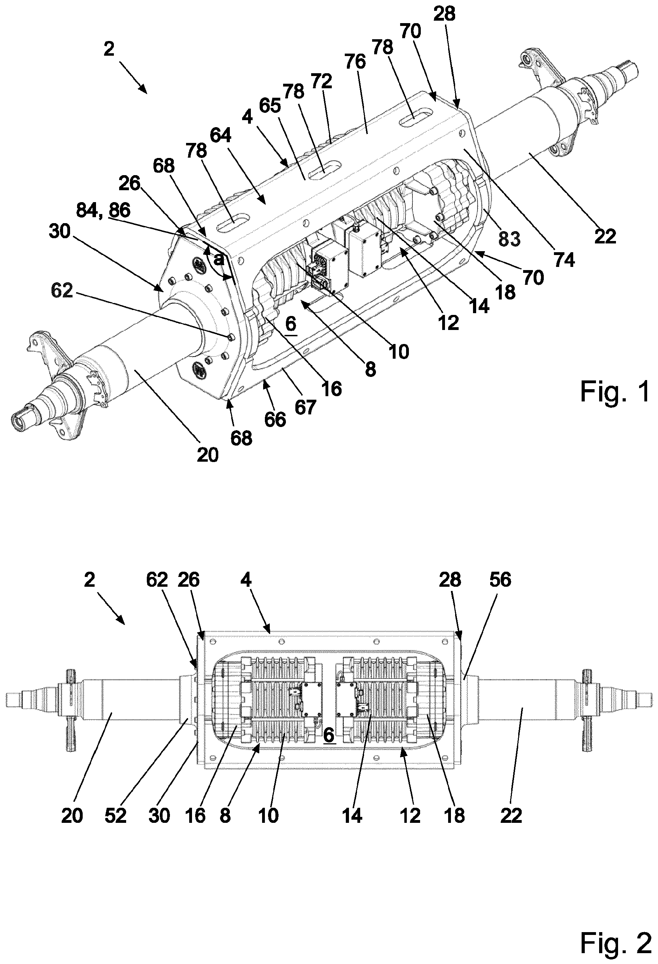

Fig. 1 zeigt eine Fahrzeugachse 2 in der Bauart als Starrachse mit zentral darin einem dreidimensionalen Tragrahmen 4. Dieser umgibt eine einen Raum bildende Aufnahmeöffnung 6. Darin befinden sich zwei elektrische Vorrichtungen 8, 12, die jeweils eine elektrische Maschine 10, 14 und vorzugsweise ferner jeweils ein Getriebe 16, 18 aufweisen. Jede elektrische Maschine 10, 14 ist im Motor- und/oder im Generatorbetrieb betreibbar, sie ist also insbesondere ein elektrischer Antriebsmotor oder ein Generator.

Die erste elektrische Vorrichtung 8 weist ein der elektrischen Maschine 10 vorgeschaltetes Getriebe 16 auf. Auch die zweite elektrische Vorrichtung 12 weist ein der elektrischen Maschine 14 vorgeschaltetes Getriebe 18 auf. Die elektrischen Vorrichtungen 8, 12 sind zumindest teilweise in dem durch die Aufnahmeöffnung 6 gebildeten Raum des Tragrahmens 4 aufgenommen und an Teilen des Tragrahmens 4 befestigt.

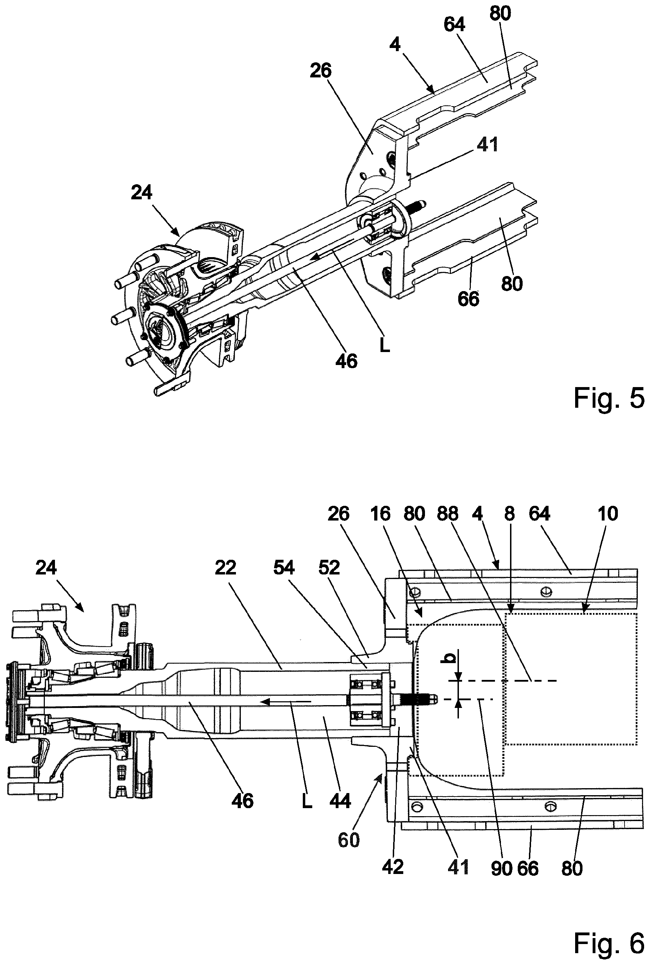

Die Fahrzeugachse 2 weist endseitig Achsstummel 20, 22 auf, an denen jeweils ein drehbar gelagerter Radkopf 24 angeordnet ist, wobei in den Figuren 5 und 6 lediglich ein Radkopf 24 des Achsstummels 20 exemplarisch gezeigt ist. Beide Radköpfe drehen auf derselben Radkopfdrehachse 90 (Fig. 6), die zugleich mit der Mittelachse der Achsstummel 20, 22 zusammenfällt. Jeder Radkopf 24 beinhaltet unter anderem eine Radnabe, das Fahrzeugrad oder auch die Bremsscheibe einer Scheibenbremse.

Der eine Radkopf 24 kann mittels der elektrischen Maschine 10 beschleunigt und/oder verzögert werden. Der andere Radkopf kann mittels der anderen elektrischen Maschine 14 beschleunigt und/oder verzögert werden.

Der Achsstummel 20, 22 ist nach fahrzeuginnen rohrförmig als ein Rohrabschnitt gestaltet und dort jeweils an einem Verbindungsabschnitt 26, 28 befestigt. Der Verbindungsabschnitt 26, 28 ist eine Querwand, die als Stirnwand Bestandteil des Tragrahmens 4 ist. Der erste Verbindungsabschnitt 26 weist eine dem Radkopf 24 zugewandte Außenseite 30 und eine dem Radkopf 24 abgewandte und der zentralen Aufnahmeöffnung 6 zugewandte Innenseite 32 auf. Gleichermaßen weist der zweite Verbindungsabschnitt 28 eine der Aufnahmeöffnung abgewandte Außenseite 34 und eine der Aufnahmeöffnung 6 zugewandte Innenseite 36 auf.

Die erste elektrische Vorrichtung 8 ist an einer der zentralen Aufnahmeöffnung 6 zugewandten Anschlagfläche 38 der Innenseite 32 des Verbindungsabschnitts 26 angeordnet und ist lösbar gegen die der Aufnahmeöffnung 6 zugewandte Anschlagfläche 38 verspannt.

Die Anschlagfläche 38 ist ringförmig und sie umgibt konzentrisch einen gegenüber der Anschlagfläche 38 axial vorspringenden Zentrierring 41. Der Zentrierring 41 ist mit seinem Außenumfang dazu ausgebildet, die elektrische Vorrichtung 8 radial auszurichten, also zu zentrieren. In axialer Richtung hingegen ist die elektrische Vorrichtung 8 ohne einen Kontakt zu dem Zentrierring 41.

Die zweite elektrische Vorrichtung 12 ist an einer der zentralen Aufnahmeöffnung 6 zugewandten Anschlagfläche 40 der Innenseite 36 des Verbindungsabschnitts 28 angeordnet und ist lösbar gegen die der Aufnahmeöffnung 6 zugewandte Anschlagfläche 40 verspannt.

Auch die Anschlagfläche 40 ist ringförmig und sie umgibt konzentrisch einen gegenüber der Anschlagfläche 40 axial vorspringenden Zentrierring 41. Der Zentrierring 41 ist mit seinem Außenumfang dazu ausgebildet, die elektrische Vorrichtung 12 radial auszurichten, also zu zentrieren. In axialer Richtung hingegen ist die elektrische Vorrichtung 12 ohne einen Kontakt zu dem Zentrierring 41.

Der Achsstummel 20 einschließlich seines nach fahrzeuginnen sich erstreckenden Rohrabschnitts und der Verbindungsabschnitt 26 weisen jeweils eine Durchgangsöffnung 42, 44 zur Hindurchführung einer drehbaren Welle 46 der elektrischen Vorrichtung auf. Die Welle 46 durchdringt kontaktlos die Durchgangsöffnungen 42, 44 des Verbindungsabschnitts 26 und den Achsstummel 20 entlang ihrer axialen Längserstreckung L.

Die Anschlagfläche 38, 40 ist quer zu der axialen Längserstreckung L der Welle 46 angeordnet. Die erste elektrische Vorrichtung 8 ist axial, also in Richtung der Längserstreckung der Welle 46, gegen die Anschlagfläche 38 abgestützt und verspannt.

Gleichermaßen haben auch der andere Verbindungsabschnitt 28 und der Achsstummel 22 Durchgangsöffnungen 48, 50 zum Aufnehmen einer Welle der elektrischen Vorrichtung 12, wobei auch hier die elektrische Vorrichtung 12 axial gegen die zugeordnete Anschlagfläche 40 an dem Verbindungsabschnitt 28 abgestützt bzw. verspannt ist.

Der Verbindungsabschnitt 26 weist einen kreisrund umlaufenden Kragen 52 auf, der die Durchgangsöffnung 42 des Verbindungsabschnitts 26 begrenzt, wobei die Durchgangsöffnung 42 des Verbindungsabschnitts 26 kreiszylindrisch ist. Der Achsstummel 20 sitzt mit einem kreiszylindrischen Endabschnitt 54 in der kreiszylindrischen Durchgangsöffnung 42 des Verbindungsabschnitts 26.

Der Achsstummel 20 ist stoffschlüssig mit dem Verbindungsabschnitt 26 verbunden.

Auch der andere Verbindungsabschnitt 28 weist einen kreisrund umlaufenden Kragen 56 auf, der die Durchgangsöffnung 48 des Verbindungsabschnitts 28 begrenzt, wobei die Durchgangsöffnung 48 des Verbindungsabschnitts 28 kreiszylindrisch ist. Der Achsstummel 22 sitzt mit einem kreiszylindrischen Endabschnitt 58 in der kreiszylindrischen Durchgangsöffnung 42 des Verbindungsabschnitts 26.

Der jeweilige Verbindungsabschnitt 26, 28 weist, auf der ringförmigen Fläche der Anschlagfläche 38, 40, einen Lochkreis 60 einer Schraubenverbindung 62 auf, mit der die elektrische Vorrichtung 8, 12 an dem Verbindungsabschnitt 26, 28 gehalten ist. Der Durchmesser D1 des Lochkreises 60 ist größer als der Durchmesser des Zentrierrings 41 und ist nochmals größer als der Durchmesser D2 der Durchgangsöffnung 42, 44 des Verbindungsabschnitts 26, 28.

Der Tragrahmen 4 weist zwei zueinander beabstandete und im Wesentlichen zueinander parallele Streben 64, 66 auf. Ein erstes Ende 68 jeder Strebe 64, 66 ist mit dem ersten Verbindungsabschnitt 26 verbunden. Ein zweites Ende 70 jeder Strebe 64, 66 ist mit dem zweiten Verbindungsabschnitt 28 verbunden.

Die Streben 64, 66 und die wandförmigen Verbindungsabschnitte 26, 28 des Tragrahmens 4 begrenzen daher die Aufnahmeöffnung 6, und fassen die elektrischen Vorrichtungen 8, 12 zumindest überwiegend ein.

Die erste elektrische Vorrichtung 8 ist ausschließlich an dem Verbindungsabschnitt 26 befestigt und nicht an den Streben 64, 66. Die zweite elektrische Vorrichtung 12 ist ausschließlich an dem Verbindungsabschnitt 28 befestigt und ebenfalls nicht an den Streben 64, 66.

Die Streben 64, 66 weisen zumindest abschnittsweise einen ersten Abstand A1 zueinander auf, die Verbindungsabschnitte 26, 28 weisen zumindest abschnittsweise einen zweiten Abstand A2 zueinander auf, und der erste Abstand A1 ist kleiner als der zweite Abstand A2.

Die Streben 64, 66 sind Halbschalen 64, 66, die jeweils zwei Seitenwangen 72, 74 aufweisen. Die Seitenwangen 72, 74 schließen jeweils einen Winkel a ausgewählt aus einem Bereich größer gleich 90° und kleiner gleich 115° zu einem Mittelteil 76 der jeweiligen Halbschale 64, 66 ein, wie dies in Fig. 1 exemplarisch für die Halbschale 64 dargestellt ist. Die so gebildete Innenkontur 84 der Streben 64, 66 korrespondiert insbesondere zumindest abschnittsweise mit der Außenkontur 86 des Verbindungsabschnitts.

Die Streben 64, 66 weisen Durchgangsöffnungen 78 auf, so dass sich kein Schmutzwasser stauen kann.

Bei montierter Fahrzeugachse ist die eine Strebe 64 zur Fahrbahn hin gerichtet, und die andere Strebe 66 von der Fahrbahn weg.

Die Streben 64, 66 sind zumindest abschnittsweise doppelwandig ausgeführt und weisen jeweils ein Einlegeblech 80 auf, das in axialer Richtung betrachtet kürzer ist als eine die Verbindungsabschnitte überlappende Außenseite 82 der Streben 64, 66, wie dies exemplarisch für die Strebe 64 dargestellt ist. Die Überlappung ist vorzugsweise kleiner als die Materialstärke der jeweiligen Verbindungsabschnitte 26, 28. Somit ist es zum Verschweißen möglich, auf der Außenkontur des Verbindungsabschnitts 26, 28 eine Kehlnaht zu ziehen. Um auf dieser Außenkontur maschinell eine einzige Kehlnaht sowohl für die eine Strebe 64 wie für die andere Strebe 66 zu ziehen, also eine über den Umfang der Außenkontur durchgehende Kehlnaht, werden vor dem Schweißen zwischen den sich gegenüberliegenden Enden der Strebenwangen auf der Außenseite der Verbindungsabschnitte 26, 28 Blechstreifen 83 eingelegt, die beim Ziehen der einzigen Kehlnaht mit verschweißt werden.

Gemäß Fig. 1 entspricht eine Innenkontur 84 der Streben 64, 66 zumindest abschnittsweise einer Außenkontur 86 der Verbindungsabschnitte 26, 28. Die Einlegebleche 80 weisen ebenfalls Durchgangsöffnungen 78 auf.

Fig. 6 zeigt schematisch die elektrische Maschine 10 mit dem vorgeschalteten Getriebe 16. Die Drehachse der elektrischen Maschine 10 ist um den Achsenabstand b versetzt zu der Achse 90 der Welle 46 und des Radkopfs 24. In ähnlicher Weise ist eine zwischen der elektrischen Maschine 10 und dem Getriebe 16 verlaufende Verbindungswelle 88 parallel und unter einen Achsenabstand b zu der Achse 90 der Welle 46 angeordnet. Dies gilt gleichermaßen auch für das andere Getriebe 18 und die andere elektrische Maschine 14.

Aufgrund ihres Versatzes b steht die jeweilige elektrische Maschine 10, 14 teilweise nach außen über die Umfangskontur der Verbindungsabschnitte 26, 28 hervor. Dieses Überstehen beider elektrischer Maschinen 10, 14 erfolgt vorzugsweise nach vorne, also in Fahrtrichtung.

### Bezugszeichen

2 : Fahrzeugachse
4 : Tragrahmen
6 : Aufnahmeöffnung
8, 12 : elektrische Vorrichtung
10,14 : elektrische Maschine
16, 18 : Getriebe
20,22 : Achsstummel
24 : Radkopf
26, 28 : Verbindungsabschnitt
30,34 : Außenseite
32,36 : Innenseite
38, 40 : Anschlagfläche
41 : Zentrierring
42, 44 : Durchgangsöffnung
46 : Welle
48, 50 : Durchgangsöffnung
52,56 : Kragen
54, 58 : Endabschnitt
60 : Lochkreis
62 : Schraubenverbindung
64,66 : Strebe
65, 67 : Halbschale
68, 70 : erstes bzw. zweites Ende
72,74 : Seitenwange
76 : Mittelteil
78 : Durchgangsöffnung
80 : Einlegeblech
82 : Außenseite
83 : Blechstreifen
84 : Innenkontur
86 : Außenkontur
88 : Verbindungswelle
90 : Radkopfdrehachse
a : Winkel
b : Achsenabstand, Versatz
A1 : erster Abstand
A2 : zweiter Abstand
D1, D2 : Durchmesser
L : Längserstreckung

## Patentansprüche

1. Fahrzeugachse,
- mit einem Tragrahmen (4), der eine Aufnahmeöffnung (6) begrenzt,
- mit einer elektrischen Vorrichtung (8, 12), die eine elektrische Maschine (10, 14) aufweist, wobei die elektrische Maschine (10, 14) im Motor- und/oder im Generatorbetrieb betreibbar ist und die elektrische Vorrichtung (8, 12) zumindest teilweise in der Aufnahmeöffnung (6) des Tragrahmens (4) aufgenommen und an dem Tragrahmen (4) befestigt ist,
- mit endseitigen Achsstummeln (20, 22), an denen jeweils ein drehbar gelagerter Radkopf (24) angeordnet ist, wobei mindestens einer der Radköpfe (24) mittels der elektrischen Maschine (10, 14) beschleunigt und/oder verzögert werden kann,
- wobei der jeweilige Achsstummel (20, 22) an jeweils einem Verbindungsabschnitt (26, 28) des Tragrahmens (4) angeordnet ist und der Verbindungsabschnitt (26, 28) eine dem jeweiligen Radkopf (24) zugewandte Außenseite (30, 34) und eine der Aufnahmeöffnung (6) zugewandte Innenseite (32, 36) aufweist,
**dadurch gekennzeichnet,**
**dass** die elektrische Vorrichtung (8, 12) unmittelbar an einer der Aufnahmeöffnung (6) zugewandten Anschlagfläche (38, 40) der Innenseite (32, 36) des Verbindungsabschnitts (26, 28) angeordnet ist.

2. Fahrzeugachse nach Anspruch 1, **dadurch gekennzeichnet, dass** die elektrische Vorrichtung (8, 12) lösbar gegen die Anschlagfläche (38, 40) verspannt ist und/oder zumindest abschnittsweise spaltfrei an der Anschlagfläche (38, 40) anliegt.

3. Fahrzeugachse nach Anspruch 1 oder 2, **dadurch gekennzeichnet, dass** die Anschlagfläche (38, 40) ringförmig ist und einen gegenüber der Anschlagfläche (38, 40) axial vor- oder zurückspringenden Zentrierring (41) konzentrisch umgibt, der die elektrische Vorrichtung (8, 12) radial ausrichtet.

4. Fahrzeugachse nach Anspruch 3, **dadurch gekennzeichnet, dass** die elektrische Vorrichtung (8, 12) ohne axialen Kontakt zu dem Zentrierring (41) ist.

5. Fahrzeugachse nach einem der voranstehenden Ansprüche, **dadurch gekennzeichnet, dass** der Achsstummel (20, 22) und der jeweilige Verbindungsabschnitt (26, 28) des Tragrahmens (4) jeweils eine Durchgangsöffnung (42, 48) zum Aufnehmen einer Welle (46) der elektrischen Vorrichtung (8, 12) aufweisen, wobei die Welle (46) die Durchgangsöffnungen (42, 48) entlang ihrer axialen Längserstreckung (L) durchdringt und wobei sich die Anschlagfläche (38, 40) im Wesentlichen senkrecht zu der axialen Längserstreckung (L) der Welle (46) erstreckt.

6. Fahrzeugachse nach Anspruch 5, **dadurch gekennzeichnet, dass** der Verbindungsabschnitt (26, 28) einen kreisrund umlaufenden Kragen (52, 56) aufweist, der die Durchgangsöffnung (42, 48) des Verbindungsabschnitts (26, 28) begrenzt, wobei der jeweilige Achsstummel (20, 22) mit einem Endabschnitt (54, 58) in der Durchgangsöffnung (42, 48) des Verbindungsabschnitts (26, 28) sitzt und insbesondere stoffschlüssig mit dem Verbindungsabschnitt (26, 28) verbunden ist.

7. Fahrzeugachse nach einem der Ansprüche 2 - 6, **dadurch gekennzeichnet, dass** der Verbindungsabschnitt (26, 28) innerhalb der Anschlagfläche (38, 40) einen Lochkreis (60) einer Schraubenverbindung (62) aufweist, mit der die elektrische Vorrichtung (8, 12) gegen die Anschlagfläche (38, 40) verspannt ist, wobei der Durchmesser (D1) des Lochkreises (60) größer ist als der Durchmesser (D2) der Durchgangsöffnung (42, 48) des Verbindungsabschnitts (26, 28).

8. Fahrzeugachse nach einem der voranstehenden Ansprüche, **dadurch gekennzeichnet, dass** der Tragrahmen (4) zumindest zwei zueinander beabstandete Streben (64, 66) aufweist, wobei ein erstes Ende (68) jeder Strebe (64, 66) mit einem ersten Verbindungsabschnitt (26) der Verbindungsabschnitte (26, 28), und ein zweites Ende (70) jeder Strebe (64, 66) mit einem zweiten Verbindungsabschnitt (28) der Verbindungsabschnitte (26, 28) verbunden ist, und wobei die Streben (64, 66) und die Verbindungsabschnitte (26, 28) die Aufnahmeöffnung (6) begrenzen und die elektrische Vorrichtung (8, 12) zumindest abschnittsweise einfassen.

9. Fahrzeugachse nach Anspruch 8, **dadurch gekennzeichnet, dass** die elektrische Vorrichtung (8, 12) ausschließlich an einem der Verbindungsabschnitte (26, 28) befestigt ist und insbesondere nicht an einer der Streben (64, 66) befestigt ist.

10. Fahrzeugachse nach einem der Ansprüche 8 oder 9, **dadurch gekennzeichnet, dass** die Streben (64, 66) zumindest abschnittsweise einen ersten Abstand (A1) zueinander aufweisen, die Verbindungsabschnitte (26, 28) zumindest abschnittsweise einen zweiten Abstand (A2) zueinander aufweisen und der erste Abstand (A1) kleiner ist als der zweite Abstand (2),
und/oder
die Streben (64, 66) Halbschalen (65, 67) aufweisen,
- wobei die Halbschalen (65, 67) wenigstens zwei Seitenwangen (72, 74) aufweisen, wobei die Seitenwangen (72, 74) jeweils einen Winkel (a) größer 90 ° zu einem Mittelteil (76) der Halbschalen (65, 67) einschließen, insbesondere einen Winkel (a) ausgewählt aus einem Bereich größer-gleich 90° und kleiner-gleich 115° zu dem Mittelteil (76) der Halbschalen (65, 67) einschließen, und/oder
- die Halbschalen (65, 67) symmetrisch sind
und/oder
die Streben (64, 66) eine oder mehr Durchgangsöffnungen (78) aufweisen
und/oder
die Streben (64, 66) zumindest abschnittsweise doppelwandig ausgeführt sind, wobei die Doppelwand mittels eines Einlegeblechs (80) gebildet ist, das unter Wahrung eines Abstands zum Mittelteil (76) stoffschlüssig mit den Seitenwangen (72, 74) verbunden ist
und/oder
die Streben (64, 66) zumindest abschnittsweise stoffschlüssig mit den Verbindungsabschnitten (26, 28) verbunden sind
und/oder eine Innenkontur (84) der Streben (64, 66) zumindest abschnittsweise einer Außenkontur (86) der Verbindungsabschnitte (26, 28) entspricht.

11. Fahrzeugachse nach einem der voranstehenden Ansprüche, **dadurch gekennzeichnet, dass** die elektrische Vorrichtung (8, 12) ein der elektrischen Maschine (10, 14) vorgeschaltetes Getriebe (16, 18) aufweist und eine zwischen der elektrischen Maschine (10, 14) und dem Getriebe (16, 18) angeordnete Verbindungswelle (88) parallel und mit einem Achsabstand (b) zu einer Radkopfdrehachse (90) des jeweiligen Radkopfes (24) angeordnet ist.

12. Fahrzeugachse nach einem der voranstehenden Ansprüche, **dadurch gekennzeichnet, dass** eine weitere elektrische Vorrichtung (8, 12) vorgesehen ist, wobei die weitere elektrische Vorrichtung (8, 12) an einer der Aufnahmeöffnung (6) zugewandten Anschlagfläche (38, 40) der Innenseite (32, 36) eines weiteren Verbindungsabschnitts (26, 28) der Verbindungsabschnitte (26, 28) angeordnet ist.

13. Fahrzeug mit mindestens einer Fahrzeugachse (2) gemäß einem der voranstehenden Ansprüche, wobei die elektrische Maschine (10, 14) mit einer Batterie des Fahrzeugs gekoppelt ist.

14. Fahrzeug nach Anspruch 13, **dadurch gekennzeichnet, dass** das Fahrzeug eine Kühlvorrichtung zum Kühlen eines Transportvolumens aufweist, wobei die Batterie zur Energieversorgung der Kühlvorrichtung mit der Kühlvorrichtung gekoppelt ist.

15. Fahrzeug nach Anspruch 14, **dadurch gekennzeichnet, dass** das Fahrzeug eine Steuerungseinheit zur Überwachung eines Ladezustands der Batterie aufweist, wobei die Steuerungseinheit dazu eingerichtet ist, einen Generatorbetrieb der elektrischen Maschine zu aktivieren, sobald eine Ladeschwelle der Batterie unterschritten wird.

## Claims

1. Vehicle axle,
- comprising a support frame (4) which delimits a receiving opening (6),
- comprising an electrical device (8, 12) which has an electrical machine (10, 14), the electrical machine (10, 14) being operable in a motor and/or generator mode, and the electrical device (8, 12) being at least partially accommodated in the receiving opening (6) of the support frame (4) and fastened to the support frame (4),
- comprising axle stubs (20, 22) at the ends, on each of which a rotatably mounted wheel head (24) is arranged, at least one of the wheel heads (24) being able to be accelerated and/or decelerated by means of the electric machine (10, 14),
- the relevant axle stub (20, 22) being arranged on a relevant connecting portion (26, 28) of the support frame (4), and the connecting portion (26, 28) having an outer side (30, 34) facing the relevant wheel head (24) and an inner side (32, 36) facing the receiving opening (6),
**characterized in that**
the electrical device (8, 12) is arranged directly on a stop surface (38, 40) of the inner side (32, 36) of the connecting portion (26, 28), which stop surface faces the receiving opening (6).

2. Vehicle axle according to claim 1, **characterized in that** the electrical device (8, 12) is releasably clamped against the stop surface (38, 40) and/or abuts the stop surface (38, 40) at least in portions with no gap.

3. Vehicle axle according to claim 1 or 2, **characterized in that** the stop surface (38, 40) is annular and concentrically surrounds a centering ring (41) which is axially protruding or recessed with respect to the stop surface (38, 40) and radially aligns the electrical device (8, 12).

4. Vehicle axle according to claim 3, **characterized in that** the electrical device (8, 12) is not in axial contact with the centering ring (41).

5. Vehicle axle according to any of the preceding claims, **characterized in that** the axle stub (20, 22) and the relevant connecting portion (26, 28) of the support frame (4) each have a through-opening (42, 48) for accommodating a shaft (46) of the electrical device (8, 12), the shaft (46) passing through the through-openings (42, 48) along the axial longitudinal extent (L) thereof, and the stop surface (38, 40) extending substantially perpendicularly to the axial longitudinal extent (L) of the shaft (46).

6. Vehicle axle according to claim 5, **characterized in that** the connecting portion (26, 28) has a circular circumferential collar (52, 56) which delimits the through-opening (42, 48) of the connecting portion (26, 28), an end portion (54, 58) of the relevant axle stub (20, 22) sitting in the through opening (42, 48) of the connecting portion (26, 28) and being, in particular integrally, connected to the connecting portion (26, 28).

7. Vehicle axle according to any of claims 2-6, **characterized in that** the connecting portion (26, 28), within the stop surface (38, 40), has a hole circle (60) of a screw connection (62) by means of which the electrical device (8, 12) is clamped against the stop surface (38, 40), the diameter (D1) of the hole circle (60) being larger than the diameter (D2) of the through-opening (42, 48) of the connecting portion (26, 28).

8. Vehicle axle according to any of the preceding claims, **characterized in that** the support frame (4) has at least two struts (64, 66) spaced apart from one another, a first end (68) of each strut (64, 66) being connected to a first connecting portion (26) of the connecting portions (26, 28), and a second end (70) of each strut (64, 66) being connected to a second connecting portion (28) of the connecting portions (26, 28), and the struts (64, 66) and the connecting portions (26, 28) delimiting the receiving opening (6) and enclosing the electrical device (8, 12) at least in portions.

9. Vehicle axle according to claim 8, **characterized in that** the electrical device (8, 12) is fastened exclusively to one of the connecting portions (26, 28) and in particular is not fastened to one of the struts (64, 66).

10. Vehicle axle according to claim 8 or 9, **characterized in that** the struts (64, 66) are at a first distance (A1) from one another at least in portions, the connecting portions (26, 28) are at a second distance (A2) from one another at least in portions, and the first distance (A1) is smaller than the second distance (2),
and/or
the struts (64, 66) have half shells (65, 67),
- the half shells (65, 67) having at least two side faces (72, 74), wherein the side faces (72, 74) each enclose an angle (a) of greater than 90° with respect to a central part (76) of the half shells (65, 67), in particular an angle (a) selected from a range greater than or equal to 90° and less than or equal to 115° with respect to the central part (76) of the half-shells (65, 67), and/or - the half-shells (65, 67) are symmetrical, and/or
the struts (64, 66) have one or more through-openings (78),
and/or
the struts (64, 66) are double-walled at least in portions, the double wall being formed by means of an insert plate (80) which is integrally connected to the side faces (72, 74) while maintaining a distance from the central part (76), and/or
the struts (64, 66) are at least partially integrally connected to the connecting portions (26, 28),
and/or an inner contour (84) of the struts (64, 66) corresponds at least in portions to an outer contour (86) of the connecting portions (26, 28).

11. Vehicle axle according to any of the preceding claims, **characterized in that** the electrical device (8, 12) has a gear (16, 18) connected upstream of the electrical machine (10, 14), and a connecting shaft (88) arranged between the electrical machine (10, 14) and the gear (16, 18) is arranged in parallel with and at an axial distance (b) from a wheel head rotation axis (90) of the relevant wheel head (24).

12. Vehicle axle according to any of the preceding claims, **characterized in that** a further electrical device (8, 12) is provided, the further electrical device (8, 12) being arranged on a stop surface (38, 40) of the inner side (32, 36) of a further connecting portion (26, 28) of the connecting portions (26, 28), which stop surface faces the receiving opening (6).

13. Vehicle comprising at least one vehicle axle (2) according to any of the preceding claims, wherein the electric machine (10, 14) is coupled to a battery of the vehicle.

14. Vehicle according to claim 13, **characterized in that** the vehicle has a cooling device for cooling a transport volume, the battery for supplying energy to the cooling device being coupled to the cooling device.

15. Vehicle according to claim 14, **characterized in that** the vehicle has a control unit for monitoring a charge state of the battery, the control unit being designed to activate a generator operation of the electric machine as soon as the charge falls below a charge threshold of the battery.

## Revendications

1. Essieu de véhicule,
- comportant un cadre de support (4) qui délimite une ouverture de réception (6),
- comportant un dispositif électrique (8, 12) qui présente une machine électrique (10, 14), dans lequel la machine électrique (10, 14) peut fonctionner dans le mode de fonctionnement de moteur et/ou dans le mode de fonctionnement de générateur et le dispositif électrique (8, 12) est reçu au moins partiellement dans l'ouverture de réception (6) du cadre de support (4) et est fixé au cadre de support (4),
- comportant des fusées d'essieu (20, 22) aux extrémités, sur lesquelles est respectivement disposé un moyeu de roue (24) monté de manière à pouvoir tourner, dans lequel au moins l'un des moyeux de roue (24) peut être accéléré et/ou décéléré au moyen de la machine électrique (10, 14),
- dans lequel la fusée d'essieu (20, 22) respective est disposée au niveau de respectivement une section de liaison (26, 28) du cadre de support (4) et la section de liaison (26, 28) présente un côté extérieur (30, 34) tourné vers le moyeu de roue (24) respectif et un côté intérieur (32, 36) tourné vers l'ouverture de réception (6),
**caractérisé en ce**
**que** le dispositif électrique (8, 12) est disposé directement sur une surface de butée (38, 40), tournée vers l'ouverture de réception (6), de la face intérieure (32, 36) de la section de liaison (26, 28).

2. Essieu de véhicule selon la revendication 1, **caractérisé en ce que** le dispositif électrique (8, 12) est serré de manière amovible contre la surface de butée (38, 40) et/ou s'appuie au moins dans certaines sections sans fente contre la surface de butée (38, 40).

3. Essieu de véhicule selon la revendication 1 ou 2, **caractérisé en ce que** la surface de butée (38, 40) est annulaire et entoure de manière concentrique une bague de centrage (41) en saillie ou en retrait axialement par rapport à la surface de butée (38, 40), laquelle bague de centrage oriente radialement le dispositif électrique (8, 12).

4. Essieu de véhicule selon la revendication 3, **caractérisé en ce que** le dispositif électrique (8, 12) est sans contact axial avec la bague de centrage (41).

5. Essieu de véhicule selon l'une des revendications précédentes, **caractérisé en ce que** la fusée d'essieu (20, 22) et la section de liaison (26, 28) respective du cadre de support (4) présentent respectivement une ouverture de passage (42, 48) pour la réception d'un arbre (46) du dispositif électrique (8, 12), dans lequel l'arbre (46) traverse les ouvertures de passage (42, 48) le long de son extension longitudinale axiale (L) et dans lequel la surface de butée (38, 40) s'étend sensiblement perpendiculairement à l'extension longitudinale axiale (L) de l'arbre (46).

6. Essieu de véhicule selon la revendication 5, **caractérisé en ce que** la section de liaison (26, 28) présente une collerette (52, 56) périphérique circulaire qui délimite l'ouverture de passage (42, 48) de la section de liaison (26, 28), dans lequel la fusée d'essieu (20, 22) respective est logée avec une section d'extrémité (54, 58) dans l'ouverture de passage (42, 48) de la section de liaison (26, 28) et est reliée en particulier par liaison de matière à la section de liaison (26, 28).

7. Essieu de véhicule selon l'une des revendications 2 à 6,
**caractérisé en ce que** la section de liaison (26, 28) présente, à l'intérieur de la surface de butée (38, 40), un cercle de trous (60) d'une liaison par vis (62) au moyen de laquelle le dispositif électrique (8, 12) est serré contre la surface de butée (38, 40), dans lequel le diamètre (D1) du cercle de trous (60) est supérieur au diamètre (D2) de l'ouverture de passage (42, 48) de la section de liaison (26, 28).

8. Essieu de véhicule selon l'une des revendications précédentes, **caractérisé en ce que** le cadre de support (4) présente au moins deux entretoises (64, 66) espacées l'une de l'autre, dans lequel une première extrémité (68) de chaque entretoise (64, 66) est reliée à une première section de liaison (26) des sections de liaison (26, 28), et une seconde extrémité (70) de chaque entretoise (64, 66) est reliée à une seconde section de liaison (28) des sections de liaison (26, 28), et dans lequel les entretoises (64, 66) et les sections de liaison (26, 28) délimitent l'ouverture de réception (6) et entourent le dispositif électrique (8, 12) au moins dans certaines sections.

9. Essieu de véhicule selon la revendication 8, **caractérisé en ce que** le dispositif électrique (8, 12) est fixé exclusivement à l'une des sections de liaison (26, 28) et en particulier n'est pas fixé à l'une des entretoises (64, 66).

10. Essieu de véhicule selon l'une des revendications 8 ou 9, **caractérisé en ce que** les entretoises (64, 66) présentent, au moins dans certaines sections, un premier écartement (A1) entre elles, les sections de liaison (26, 28) présentent, au moins dans certaines sections, un second écartement (A2) entre elles, et le premier écartement (A1) est inférieur au second écartement (2),
et/ou
les entretoises (64, 66) présentent des demi-coques (65, 67),
- dans lequel les demi-coques (65, 67) présentent au moins deux joues latérales (72, 74), dans lequel les joues latérales (72, 74) forment respectivement un angle (a) supérieur à 90° par rapport à une partie centrale (76) des demi-coques (65, 67), en particulier un angle (a) choisi dans une plage supérieure ou égale à 90° et inférieure ou égale à 115° par rapport à la partie centrale (76) des demi-coques (65, 67), et/ou
- les demi-coques (65, 67) sont symétriques et/ou
les entretoises (64, 66) présentent une ou plusieurs ouvertures de passage (78)
et/ou
les entretoises (64, 66) sont réalisées, au moins dans certaines sections, à double paroi, dans lequel la double paroi est formée au moyen d'une tôle insérée (80) qui est reliée aux joues latérales (72, 74) par liaison de matière en maintenant un écartement par rapport à la partie centrale (76) et/ou
les entretoises (64, 66) sont reliées, au moins dans certaines sections, aux sections de liaison (26, 28) par liaison de matière
et/ou un contour intérieur (84) des entretoises (64, 66) correspond, au moins dans certaines sections, à un contour extérieur (86) des sections de liaison (26, 28).

11. Essieu de véhicule selon l'une des revendications précédentes, **caractérisé en ce que** le dispositif électrique (8, 12) présente un engrenage (16, 18) monté en amont de la machine électrique (10, 14) et un arbre de liaison (88), lequel est disposé entre la machine électrique (10, 14) et l'engrenage (16, 18), est disposé parallèlement et avec un certain écartement axial (b) par rapport à un axe de rotation de moyeu de roue (90) du moyeu de roue (24) respectif.

12. Essieu de véhicule selon l'une des revendications précédentes, **caractérisé en ce qu'**un autre dispositif électrique (8, 12) est prévu, dans lequel l'autre dispositif électrique (8, 12) est disposé sur une surface de butée (38, 40), tournée vers l'ouverture de réception (6), du côté intérieur (32, 36) d'une autre section de liaison (26, 28) des sections de liaison (26, 28).

13. Véhicule comportant au moins un essieu de véhicule (2) selon l'une des revendications précédentes, dans lequel la machine électrique (10, 14) est couplée à une batterie du véhicule.

14. Véhicule selon la revendication 13, **caractérisé en ce que** le véhicule présente un dispositif de refroidissement permettant de refroidir un volume de transport, dans lequel la batterie est couplée au dispositif de refroidissement pour alimenter le dispositif de refroidissement en énergie.

15. Véhicule selon la revendication 14, **caractérisé en ce que** le véhicule présente une unité de commande permettant de surveiller un état de charge de la batterie, dans lequel l'unité de commande est configurée pour activer un mode de fonctionnement de générateur de la machine électrique dès qu'un seuil de charge de la batterie n'est pas atteint.
